(19) Europäisches Patentamt / European Patent Office / Office européen des brevets

(11) **EP 4 517 862 B1**

(12) **EUROPEAN PATENT SPECIFICATION**

(45) Date of publication and mention
of the grant of the patent:
**18.03.2026 Bulletin 2026/12**

(21) Application number: **24183192.4**

(22) Date of filing: **19.06.2024**

(51) International Patent Classification (IPC):
*H01M 4/133* (2010.01)    *H01M 4/583* (2010.01)
*H01M 10/0525* (2010.01)    *H01M 10/613* (2014.01)
*H01M 10/651* (2014.01)    *H01M 4/02* (2006.01)

(52) Cooperative Patent Classification (CPC):
**H01M 4/133; H01M 4/583; H01M 10/0525;
H01M 10/613; H01M 10/651;** H01M 2004/021;
H01M 2004/027; Y02E 60/10

(54) **NEGATIVE ELECTRODE SHEET, SECONDARY BATTERY, AND ELECTRICITY-CONSUMPTION DEVICE**

NEGATIVELEKTRODENFOLIE, SEKUNDÄRBATTERIE UND STROMVERBRAUCHSVORRICHTUNG

FEUILLE D'ÉLECTRODE NÉGATIVE, BATTERIE SECONDAIRE ET DISPOSITIF DE CONSOMMATION D'ÉLECTRICITÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.07.2023 CN 202310922206**

(43) Date of publication of application:
**05.03.2025 Bulletin 2025/10**

(73) Proprietor: **Hithium Tech HK Limited
Hong Kong (HK)**

(72) Inventors:
• **PENG, Fuxi
Shenzhen City, 518110 (CN)**
• **ZHANG, Qin
Shenzhen City, 518110 (CN)**

(74) Representative: **Santarelli
Tour Trinity
1 bis Place de la Défense
92400 Courbevoie (FR)**

(56) References cited:
**US-A1- 2010 112 442     US-A1- 2014 099 555**

• **ROTH E P ET AL: "DSC investigation of exothermic reactions occurring at elevated temperatures in lithium-ion anodes containing PVDF-based binders", JOURNAL OF POWER SOURCES, ELSEVIER, AMSTERDAM, NL, vol. 134, no. 2, 12 August 2004 (2004-08-12), pages 222 - 234, XP004521732, ISSN: 0378-7753, DOI: 10.1016/J.JPOWSOUR.2004.03.074**

**Description**

TECHNICAL FIELD

This disclosure relates to the technical field of electrode materials, and in particular, to a negative electrode sheet, a secondary battery, and an electricity-consumption device.

BACKGROUND

At present, a secondary battery (for example, a lithium-ion battery and a sodium-ion battery) is widely used in fields such as electric vehicles, portable mobile devices, and aerospace because the secondary battery has high energy density, a long service life, no memory effect, a low self-discharge rate, and the like. However, the secondary battery still has serious safety concerns. Smoking, combustion, explosion, and other safety accidents caused by thermal runaway of the battery are the most common concerns.

US 2010/112442 A1 discloses an electrode for an electrochemical device, which includes a current collector and an active material layer formed on the current collector. The active material layer includes an active material capable of reversibly absorbing and desorbing lithium ions and having a theoretical capacity density of more than 833 mAh/cm$^3$, and the BET specific surface area of the active material layer is 5 m$^2$/g or more and 80 m$^2$/g or less.

US 2014/099555 A1 discloses a nonaqueous electrolytic solution secondary battery, which includes: a positive electrode; a negative electrode provided with a negative electrode active material layer containing at least a negative electrode active material; a nonaqueous electrolytic solution; and a coat containing phosphorus (P) atoms formed on a surface of the negative electrode active material, in which a ratio of an amount of phosphorus atoms per unit area of the negative electrode active material layer Mp with respect to a capacitance per unit area of the negative electrode active material layer Cdl (Mp/Cdl ratio) is 0.79 $\mu$mol/mF $\leqq$/Mp/Cdl $\leqq$/1.21 $\mu$mol/mF.

SUMMARY

Aspects of the invention are set out in the appended claims.

The disclosure is intended to provide a negative electrode sheet, a secondary battery, and an electricity-consumption device, so as to reduce occurrence of thermal runaway of the negative electrode sheet during operation.

BRIEF DESCRIPTION OF THE DRAWINGS

In order to more clearly illustrate embodiments of the disclosure or technical solutions in the related art, the following will give a brief introduction of accompany drawings required to be used in the description of the embodiments or the related art. Obviously, the accompany drawings described below are merely some embodiments of the disclosure, and those of ordinary skill in the art may also obtain other drawings according to these drawings without creative effort.

FIG. 1 is a schematic cross-sectional view of a negative electrode sheet according to an embodiment.
FIG. 2 is a schematic view of a secondary battery according to an embodiment.
FIG. 3 is a schematic view of an electricity-consumption device according to an embodiment.
FIG. 4 is an overcharge curve of a secondary battery of graphite according to embodiment 1.
FIG. 5 is an overcharge curve of a secondary battery of graphite according to comparative embodiment 2.

DETAILED DESCRIPTION

The following will describe technical solutions of embodiments of the disclosure clearly and completely with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

It may be noted that when a component is referred to as "fixed to" another component, the component may be directly positioned on the other component or an intermediate component may exist therebetween. When a component is referred to as "connected to" another component, the component may be directly connected to the other component or an intermediate component may exist therebetween simultaneously.

Unless otherwise defined, all technical and scientific terms used in the disclosure have the same meaning as commonly understood by those skilled in the art of the disclosure. The terms used in the detailed description in the disclosure are for the purpose of describing embodiments only and are not intended to limit the disclosure. The term "and/or" in the disclosure includes any and all combinations of one or more related listed items.

In related researches, there have been many researches on thermal management of a positive electrode of the battery. However, currently, in terms of a carbon-material negative electrode (especially, a graphite negative electrode), researches on exothermic characteristics and exothermic indexes of the battery remain unclear. Therefore, how to provide a safe negative active material capable of reducing occurrence of thermal runaway becomes a critical issue.

The disclosure is intended to provide a negative electrode sheet, a secondary battery, and an electricity-consumption device, so as to reduce occurrence of thermal runaway of the negative electrode sheet during operation.

The following will describe in detail embodiments of the disclosure with reference to the accompanying drawings. Various embodiments and features therein may be implemented in any combination with each other without conflict.

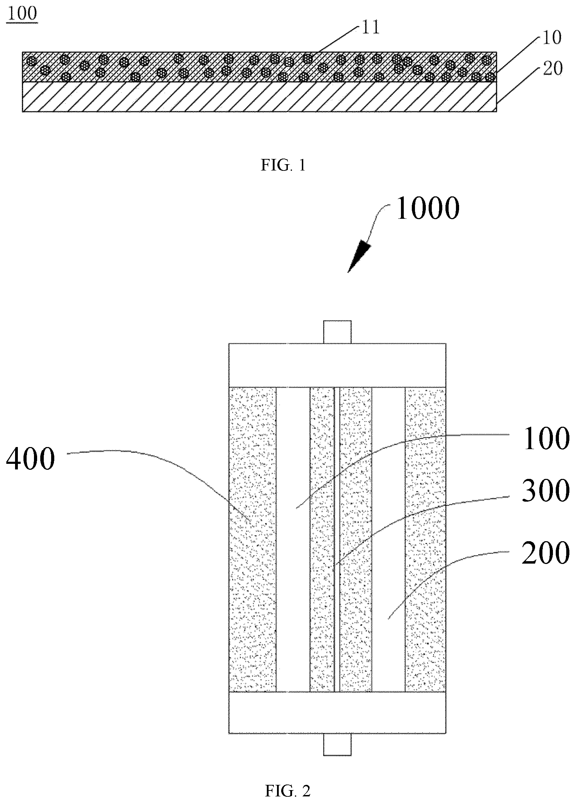

A negative electrode sheet 100 is provided in the disclosure. As illustrated in FIG. 1, the negative electrode sheet 100 includes a current collector 20 and a negative active material layer 10 disposed on the current collector 20. The negative active material layer 10 includes a negative active material 11. The negative active material layer 10 has a preset exothermic characteristic under preset conditions. The negative active material layer 10 with the preset exothermic characteristic can significantly improve high-temperature stability of the negative electrode sheet.

Specifically, when a state of charge (SOC) of a battery with the negative electrode sheet 100 is 100% or a voltage of the battery is 3.65 V, heat release Q of the negative active material layer 10 immersed in electrolyte satisfies 220 $J/g \leq Q \leq 600\ J/g$. The heat release Q of the negative active material layer 10 immersed in the electrolyte is total heat release of the negative active material layer 10 obtained by a differential scanning calorimeter (DSC) through measurement.

In an embodiment, the above preset conditions include but are not limited to a particle diameter and/or a specific surface area of the negative active material 11.

In an embodiment, the negative active material layer 10 further includes a binder and a conductive agent. The negative active material 11, the conductive agent, and the binder are added to a solvent and mixed to prepare a negative electrode slurry, and then the negative electrode slurry is coated on the negative electrode current collector 20 to prepare a negative electrode sheet 100.

In an embodiment, the negative electrode current collector 20 may be one or more of a copper foil, a porous copper foil, a foamed nickel/copper foil, a galvanized copper foil, a nickel-plated copper foil, a coated-carbon copper foil, a nickel foil, a titanium foil, and a carbonaceous porous copper foil. In an embodiment, the the negative electrode current collector 20 may be one of the copper foil, the galvanized copper foil, the nickel-plated copper foil, and the carbon-coated copper foil.

In an embodiment, the binder may be acrylonitrile, vinylidene fluoride, vinyl alcohol, carboxymethyl cellulose, lithium carboxymethyl cellulose, sodium carboxymethyl cellulose, methacryloyl, acrylic acid, lithium acrylate, acrylamide, amide, imide, acrylate, styrene-butadiene rubber, sodium alginate, chitosan, ethanediol, guar gum monomer, polymer, or copolymer.

In an embodiment, the conductive agent may be at least one of conductive carbon black, acetylene black, graphite, graphene, carbon micro-nano linear conductive material, or carbon micro-nano tubular conductive material.

A specific DSC method for testing the negative active material layer 10 is as follows.

A fully-charged battery is disassembled in a glove box to obtain a negative electrode sheet.

The negative electrode sheet 100 is cut into 2 cm*2 cm sample electrode sheets to be tested, and the sample electrode sheets to be tested are rinsed with dimethyl carbonate (DMC) for 3 min and then dried at room temperature in the glove box for 8 hours, to obtain a negative active material on the dried sample electrode sheets to be tested.

The negative active material layer and the electrolyte are added into a test crucible at a mass ratio of 0.78:1, and the crucible is sealed and then waited for the test.

A DSC test condition is set to heat the crucible from 30 °C to 450 °C at a heating rate of 5°C/min. The test is finished and test results are obtained.

In an embodiment, the crucible is a gold-plated crucible.

In an embodiment, the above electrolyte is formed by mixing ethylene carbonate (EC) and ethyl methyl carbonate (EMC) at a volume ratio of 3:7 and adding lithium hexafluorophosphate ($LiPF_6$) into the mixture, where $LiPF_6$ has a concentration of 1 mol/L.

The DSC may measure a heat-flow-power difference between a sample and a reference with changes in temperature or time under control of a certain temperature program (ascending/descending/constant temperature) and under a certain atmosphere. Based on this, information related to thermal effects such as heat absorption, heat release, and specific heat changes of the sample in the process of the temperature program may be obtained, and the heat absorption/release (enthalpy) and characteristic temperature (a starting point, a peak, and an ending point) of thermal effects may be calculated.

As can be found in researches, in a secondary battery, the total heat release of the material in the negative active material layer may be different in a fixed temperature range. The total heat release is generated with changes in temperature, and the level of the total heat release of the negative active material layer in the secondary battery may directly affect high-temperature stability of the battery. Based on an integral of a DSC exothermic peak for a mixture of an organic solvent and the negative active material layer, the total heat release of the negative active material in the fixed temperature range may be calculated. Therefore, a negative electrode sheet 100 with characteristics provided in the disclosure can be selected with the above test method.

In an embodiment, the heat release Q of the negative active material layer immersed in the electrolyte may be, but is not limited to, 220 J/g, 240 J/g, 260 J/g, 280 J/g, 300 J/g, 350 J/g, 400 J/g, 450 J/g, 500 J/g, 550 J/g, or 600 J/g.

The negative active material layer satisfying the above relationship can significantly improve high-temperature stability of the negative electrode sheet. In this way, it can be ensured that an assembled battery has low heat release even under a high-temperature operating environment, thereby avoiding the problem of thermal runaway caused by high heat release due to excessively high temperature. The total heat release of the negative active material layer satisfying the above relationship is controlled within an acceptable range of the whole battery, so that the battery will not suffer from spontaneous combustion or explosion due to excessive heat, which means that the negative electrode sheet 100 has excellent high-temperature stability.

When the heat release of the negative active material layer is below the above range, it indicates that dead lithium (inactive alkali metal ion) in the negative active material layer is relatively much, which can affect capacity and cycle life of the battery. When the heat release of the negative active material layer is above the above range, it indicates that the heat release of the negative active material layer is relatively much, which easily causes overload of heat inside the battery, so that thermal runaway may occur and thus the battery is prone to spontaneous combustion or explosion.

In an embodiment, the heat release Q of the negative active material layer immersed in the electrolyte satisfies $400 \text{ J/g} \leq Q \leq 600 \text{ J/g}$, and a particle diameter $Dv10$ of the negative active material satisfies $6.5 \text{ } \mu\text{m} \leq Dv10 \leq 10 \text{ } \mu\text{m}$. The $Dv10$ refers to a particle diameter when a cumulative volume fraction reaches 10% in measuring a volume-based distribution using a laser scattering method.

The $Dv10$ may be measured as follows. According to the GB/T19077-2016 standard, a graphite particle is sampled and measured by a laser-diffraction particle size distribution analyzer (Malvern Mastersizer 3000).

In an embodiment, the heat release $Q$ of the negative active material layer is in another range. Within this range, not only can an assembled battery have high-temperature stability, but also electrical performance of the battery can be guaranteed. It may be understood that, in order to improve performance of the assembled battery, the negative active material in the negative active material layer provided in the disclosure still needs to satisfy conditions for both the heat release $Q$ and the particle diameter $Dv10$.

Further, in addition to controlling the heat release of the negative active material layer, the particle diameter of the negative active material also needs to be controlled, so that the negative active material will not be too large or too small. Since an excessively small negative active material has a relatively large specific surface area, the reactivity between the electrolyte and the negative active material increases, so that side reaction between the negative active material layer and the electrolyte is aggravated and heat accumulation is caused, thereby leading to thermal runaway.

In an embodiment, the particle diameter $Dv10$ of the negative active material may be, but is not limited to, 6.5 μm, 7 μm, 7.5 μm, 8 μm, 8.5 μm, 9 μm, 9.5 μm, or 10 μm.

By means of further limiting a particle diameter of a carbon material, heat generated through reaction between the carbon material and the electrolyte can be further reduced by controlling the particle diameter while controlling the heat release. Therefore, it can be ensured that the negative active material layer can have high thermal stability.

When the particle diameter of the negative active material is below the above range, it indicates that the negative active material in the negative active material layer has a relatively small particle diameter, which not only easily causes a lot of side reactions but also increases preparation difficulty of the negative active material. In this case, the negative active material is easily agglomerated and difficultly subdivided. When the particle diameter of the negative active material is above the above range, the particle is too large, so that storage sites of alkali metal ions decrease and capacity of the battery is relatively low.

In an embodiment, the heat release $Q$ of the negative active material layer immersed in the electrolyte satisfies $400 \text{ J/g} \leq Q \leq 600 \text{ J/g}$, and a particle diameter of the negative active material further satisfies $0.2 \leq Dv10/Dv90 \leq 0.4$. The $Dv90$ refers to a particle diameter when the cumulative volume fraction reaches 90% in measuring the volume-based distribution using the laser scattering method.

The $Dv90$ may be measured as follows. According to the GB/T19077-2016 standard, a graphite particle is sampled and measured by the laser-diffraction particle size distribution measuring instrument (Malvern Mastersizer 3000).

In an embodiment, the $Dv10/Dv90$ may be, but is not limited to, 0.2, 0.22, 0.24, 0.26, 0.28, 0.3, 0.32, 0.34, 0.36, 0.38, or 0.4.

With the above relationship being satisfied, distribution of fine powders (relatively small particles) in the negative active material may be controlled. If the distribution of the fine powders is beyond this percentage range, it indicates that the proportion of the fine powders is too large, so that the reaction between the negative active material layer and the electrolyte is intensified and a large amount of heat is easily released, resulting in thermal runaway of the battery. In addition, when the $Dv90$ and $Dv10$ of the negative active material satisfy the above relationship, it is conducive to keeping various properties of the battery balanced and further improving energy density, cycle performance, and rate performance of the battery.

When a particle size of the negative active material is below the above range, the negative active material has a relatively large specific surface area. In this case, a large amount of active ions (lithium ions or sodium ions) needs to be consumed during the initial battery cycle to form a solid electrolyte interface (SEI) film with the electrolyte, so that initial Coulombic efficiency (ICE) of the battery is reduced. A relatively small particle size may further shorten pathways for intercalation and deintercalation of the active ions, so that dynamics performance of the battery is affected. In addition, the relatively small particle size may further have a negative effect on cyclic expansion of the battery.

When the particle size of the negative active material is relatively large, the negative active material has a relatively small specific surface area. In this case, only a small amount of active ions needs to be consumed during the initial battery cycle to form the SEI film with the electrolyte, so that the ICE of the battery may increase. A relatively large particle size may further lengthen pathways for intercalation and deintercalation of the active ions, so that dynamics performance of the battery may be reduced. In addition, the relatively large particle size may further have a negative effect on cyclic expansion of the battery.

In an embodiment, a particle diameter $Dv50$ of the negative active material satisfies 10 $\mu$m$\leq Dv50\leq$ 17 $\mu$m, and the particle diameter of the negative active material further satisfies $300\leq 1683.78-79.45Dv50\leq 600$. The $Dv50$ refers to a particle diameter when a cumulative volume fraction reaches 50% in measuring a volume-based distribution using a laser scattering method.

Specifically, the above $Dv50$ may be, but is not limited to, 10 $\mu$m, 11 $\mu$m, 12 $\mu$m, 13 $\mu$m, 14 $\mu$m, 15 $\mu$m, 16 $\mu$m, or 17 $\mu$m. The left end and the right end of the above relationship (300 and 600 respectively, in a unit of J/g) define preferable ranges of the total heat release Q of the negative active material.

In case where the particle diameter $Dv50$ of the negative active material reaches the above range, the $Dv50$ is further defined to satisfy the above relationship in which the particle diameter $Dv50$ of the negative active material is related to the heat release. With the above relationship, a negative active material with a suitable particle diameter may be selected in the determined range of the heat release. Therefore, during actual production of the battery, the negative active material with the suitable particle diameter may be selected with the above relationship, for manufacturing the negative active material layer.

When the particle diameter $Dv50$ of the negative active material is below a lower limit of the above relationship, it indicates that the negative active material has a relatively large particle diameter, and thus the heat release is relatively small. However, since the negative active material with the relatively large particle diameter is not easy to improve performance of the battery, actual application effects are relatively poor. When the particle diameter $Dv50$ of the negative active material is above an upper limit of the above relationship, it indicates that the negative active material has a relatively small particle diameter and the heat release of the particle is very large, which not only increases preparation difficulty of the negative active material but also leads to very poor thermal stability of the battery, so that thermal runaway of the battery may easily occur.

In an embodiment, the negative active material satisfies $2.2\leq30.94-14.87*(1-\exp(-Dv50/2.44))-14.87*(1-\exp(-Dv50/2.45))+B\leq3$. B is the specific surface area of the negative active material, and the $Dv50$ refers to a particle diameter when a cumulative volume fraction reaches 50% in measuring a volume-based distribution using a laser scattering method.

Specifically, a specific value of the above relationship may be, but is not limited to, 2.2, 2.3, 2.4, 2.5, 2.6, 2.7, 2.8, 2.9, or 3.

It may be understood that, the control of heat production of the battery is related to the particle diameter and the specific surface area. Therefore, relating the particle diameter to the specific surface area is intended to control the heat release of the negative active material by controlling the particle diameter and the specific surface area. When the relationship between the particle diameter $Dv50$ and the specific surface area is beyond this range, the heat release of the battery may increase, resulting in thermal runaway of the battery.

In an embodiment, the specific surface area of the negative active material satisfies 1.1 $m^2$/g to 1.7 $m^2$/g. Specifically, the specific surface area of the negative active material may be, but is not limited to, 1.1 $m^2$/g, 1.15 $m^2$/g, 1.2 $m^2$/g, 1.25 $m^2$/g, 1.3 $m^2$/g, 1.35 $m^2$/g, or 1.7 $m^2$/g.

The specific surface area may affect ICE of the negative active material and deintercalation of active ions. Therefore, if the specific surface area is too large, the ICE is relatively low, and if the specific surface area is too small, it is not conducive to deintercalation of active ions. In case where the specific surface area of the negative active material is maintained in this range, it can be ensured that the negative active material can have excellent electrochemical performance.

In an embodiment, a gram capacity of the negative active material ranges from 310 mAh/g to 350 mAh/g. Specifically, the gram capacity of the negative active material may be, but is not limited to, 310 mAh/g, 320 mAh/g, 330 mAh/g, 340 mAh/g, 341 mAh/g, 342 mAh/g, 343 mAh/g, 344 mAh/g, 345 mAh/g, 346 mAh/g, 347 mAh/g, 348 mAh/g, 349 mAh/g, or 350 mAh/g.

In an embodiment, the negative active material is one or more of a graphite particle, a soft carbon particle, or a hard carbon particle.

The graphite particle may be natural graphite or artificial graphite, but is not limited thereto. A shape of the graphite particle is not limited and may be spherical, plate-shaped, or the like. A graphite material is the most widely-used negative active material. The graphite material has good conductivity, which can not only improve conductivity of a silicon material but also increase capacity.

In an embodiment, the negative active material may be one or more of negative active materials that are subject to: surface treatments such as spheroidization or structural modification, oxidation, etching; or doping with nitrogen, phosphorus, sulfur, iron, cobalt, nickel, aluminum, zinc, or the like; or modification treatment such as being coated with an amorphous carbon layer.

In an embodiment, a secondary battery 1000 (hereinafter referred to as "battery" for short) is further provided in the disclosure. As illustrated in FIG. 2, the secondary battery 1000 includes electrolyte 400, a positive electrode sheet 200, a separator 300, and the negative electrode sheet 100 described above in the embodiment. The positive electrode sheet 200 is at least partially immersed in the electrolyte 400. The separator 300 is located at one side of the positive electrode sheet 200 and at least partially immersed in the electrolyte 400. The negative electrode sheet 100 is disposed at one side of the separator 300 away from the positive electrode sheet 200 and at least partially immersed in the electrolyte 400. Since the battery 1000 provided in the disclosure uses the negative electrode sheet 100 in the disclosure, the battery 1000 has good high-temperature stability and safety, thereby facilitating application of the battery in various fields.

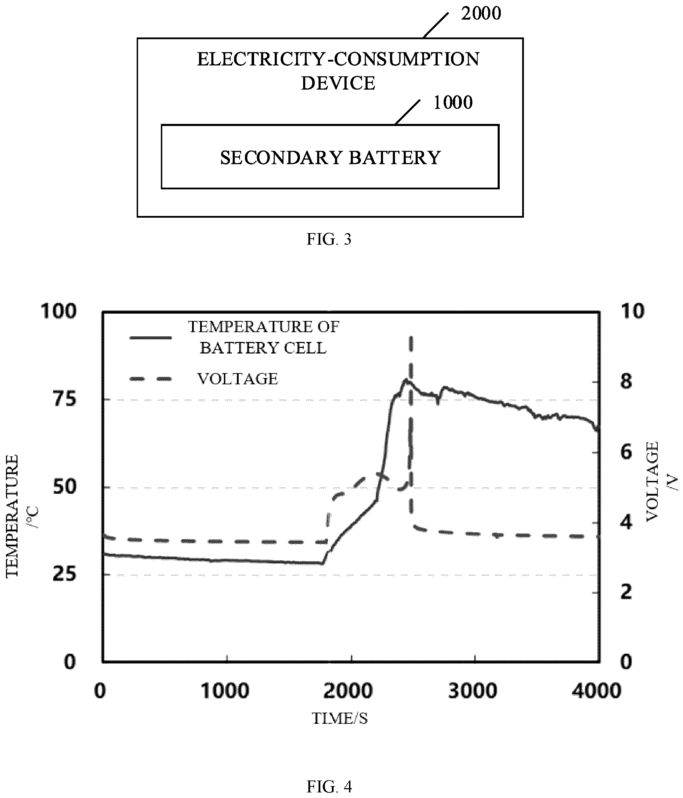

In an embodiment, as illustrated in FIG. 3, an electricity-consumption device 2000 is further provided in the disclosure. The electricity-consumption device 2000 includes the secondary battery 1000 described above. The electricity-consumption device 2000 with the secondary battery 1000 can have high high-temperature stability.

Technical solutions of the disclosure will be further described below in connection with embodiments and the accompanying drawings.

Embodiment 1

Preparation of a graphite particle: a coke raw material is subject to processes including crushing, graphitizing, and screening and demagnetization, and then artificial graphite is obtained. The artificial graphite has a particle diameter distribution of $Dv50=16.5$ μm and a particle diameter distribution of $Dv10/Dv90=0.21$, and has a specific surface area of 1.21 m$^2$/g. A negative active material layer is prepared with the graphite particle. The total heat release of the negative active material layer in the electrolyte is 260 J/g.

Embodiment 2

Preparation of a graphite particle: a coke raw material is subject to processes including crushing, graphitizing, and screening and demagnetization, and then artificial graphite is obtained. The artificial graphite has a particle diameter distribution of $Dv50=15.8$ μm and a particle diameter distribution of $Dv10/Dv90=0.23$, and has a specific surface area of 1.34 m$^2$/g. A negative active material layer is prepared with the graphite particle. The total heat release of the negative active material layer in the electrolyte is 380 J/g.

Embodiment 3

Preparation of a graphite particle: a coke raw material is subject to processes including crushing, graphitizing, and screening and demagnetization, and then artificial graphite is obtained. The artificial graphite has a particle diameter distribution of $Dv50=14.9$ μm and a particle diameter distribution of $Dv10/Dv90=0.25$, and has a specific surface area of 1.38 m$^2$/g. A negative active material layer is prepared with the graphite particle. The total heat release of the negative active material layer in the electrolyte is 470 J/g.

Embodiment 4

Preparation of a graphite particle: a coke raw material is subject to processes including crushing, graphitizing, and screening and demagnetization, and then artificial graphite is obtained. The artificial graphite has a particle diameter distribution of $Dv50=14.5$ μm and a particle diameter distribution of $Dv10/Dv90=0.28$, and has a specific surface area of 1.44 m$^2$/g. A negative active material layer is prepared with the graphite particle. The total heat release of the negative active material layer in the electrolyte is 560 J/g.

Embodiment 5

Preparation of a soft carbon particle: pitch is subject to processes including carbonization, and screening and demagnetization, and then soft carbon is obtained. The soft carbon has a particle diameter distribution of *Dv50=10.2* μm and a particle diameter distribution of *Dv10/Dv90=0.39,* and has a specific surface area of 1.57 m$^2$/g. A negative active material layer is prepared with the soft carbon particle. The total heat release of the negative active material layer in the electrolyte is 580 J/g.

Embodiment 6

Preparation of a hard carbon particle: a resin raw material is subject to processes including crushing, carbonization, and screening and demagnetization, and then hard carbon is obtained. The hard carbon has a particle diameter distribution of *Dv50=9.8* μm and a particle diameter distribution of *Dv10/Dv90=0.40,* and has a specific surface area of 1.62 m$^2$/g. A negative active material layer is prepared with the hard carbon particle. The total heat release of the negative active material layer in the electrolyte is 600 J/g.

Comparative embodiment 1

Preparation of a graphite particle: a coke raw material is subject to processes including crushing, graphitizing, and screening and demagnetization, and then artificial graphite is obtained. The artificial graphite has a particle diameter distribution of *Dv50=17.2* μm and a particle diameter distribution of *Dv10/Dv90=0.14,* and has a specific surface area of 1.19 m$^2$/g. A negative active material layer is prepared with the graphite particle. The total heat release of the negative active material layer in the electrolyte is 180 J/g.

Comparative embodiment 2

Preparation of a graphite particle: a coke raw material is subject to processes including crushing, graphitizing, and screening and demagnetization, and then artificial graphite is obtained. The artificial graphite has a particle diameter distribution of *Dv50=8.1* μm and a particle diameter distribution of *Dv10/Dv90=0.48,* and has a specific surface area of 2.12 m$^2$/g. A negative active material layer is prepared with the graphite particle. The total heat release of the negative active material layer in the electrolyte is 800 J/g.

The negative active material provided in each of embodiments 1 to 6 and the negative active material provided in one of comparative embodiments 1 to 2 may be assembled into a negative electrode sheet and a lithium-ion secondary battery in the following methods.

Positive electrode: a positive electrode material is mixed and ball-milled with polyvinylidene fluoride and conductive graphite at a mass ratio of 96:2:2 to obtain a positive electrode slurry. The positive electrode slurry is coated on a surface of an aluminum foil, is vacuum dried at 110 °C for 12 hours, and is rolled to obtain a positive electrode sheet.

Negative electrode: a negative active material is configured with conductive carbon black, carboxymethyl cellulose (CMC), and styrene-butadiene rubber (SBR) at a mass ratio of 95:2:1.2:1.8 to obtain a negative electrode slurry. The negative electrode slurry is evenly coated on an aluminum foil to obtain a negative electrode sheet.

Electrolyte: EC is mixed with EMC at a volume ratio of 3:7, and LiPF$_6$ is added thereto, so as to form the electrolyte. LiPF$_6$ has a concentration of 1 mol/L.

Separator: a polypropylene microporous separator.

Assembling of a lithium-ion secondary battery: a lithium-ion full battery is assembled in an inert-atmosphere glove box in the order of the negative electrode sheet-the separator-the electrolyte-the positive electrode sheet.

Conditions for cycle tests:

The above battery obtained is subject to charging and discharging cycle tests on a charging and discharging instrument. Test temperature is 25 °C, a cycle rate is 1C (i.e., both a charging rate and a discharging rate are 1C), a charging voltage ranges from 2.5V to 3.65V, and a capacity retention rate after cycles is calculated. A formula for calculating the capacity retention rate after the cycles is: a capacity retention rate after $n_{th}$ cycles = (discharging capacity after the $n_{th}$ cycles/maximum discharging capacity of the cycles) * 100%.

It may be understood that a term "cycle" in the disclosure refers to the number of times the battery is charged at a preset rate and discharged at the preset rate. One cycle refers to completion of one charging and discharging process by the battery. A capacity retention rate after 500 cycles refers to the capacity retention rate of the battery after 500 cycles of the charging and discharging process at test temperature of 25 °C, a charging rate of 1C, and a discharging rate of 1C.

The electrochemical performance of each lithium-ion secondary battery assembled in the above lithium-ion secondary battery embodiments is tested in terms of performances as illustrated in Table 1, and test results are illustrated in Table 1 below.

Table 1

| | Dv50 particle diameter (μm) | Specific surface area (m²/g) | Gram capacity (mAh/g) | Heat release (J/g) | Retention rate after 500 cycles (%) | Whether overcharge is passed |
|---|---|---|---|---|---|---|
| Embodiment 1 | 16.5 | 1.21 | 345 | 260 | 92.2 | YES |
| Embodiment 2 | 15.8 | 1.34 | 346 | 380 | 93.1 | YES |
| Embodiment 3 | 14.9 | 1.38 | 343 | 470 | 94.7 | YES |
| Embodiment 4 | 14.5 | 1.44 | 348 | 560 | 94.5 | YES |
| Embodiment 5 | 10.2 | 1.57 | 343 | 590 | 90.4 | YES |
| Embodiment 6 | 9.8 | 1.62 | 342 | 600 | 89.5 | YES |
| Comparative embodiment 1 | 17.2 | 1.19 | 342 | 180 | 80.5 | NO |
| Comparative embodiment 2 | 8.1 | 2.12 | 341 | 800 | 83.2 | NO |

As can be seen from embodiments 1 to 6 and comparative embodiments 1 to 2, the battery assembled with the negative active material having the heat release provided in the disclosure still can have a relatively high cycle retention rate after multiple cycles. This is because the particle diameter and the specific surface area of the negative active material in each of embodiments 1 to 6 are controlled within the ranges provided in the disclosure. Therefore, the negative electrode material layer in the negative electrode sheet has moderate heat release in a long-term use process, and the released heat has a relatively small impact on the whole battery.

As can be seen from test results of embodiment 1, embodiment 5, and embodiment 6, solutions provided in the disclosure can be applied to different negative active materials including graphite, soft carbon, and hard carbon.

As can be seen from test results of comparative embodiment 1, when the heat release is too low, since the negative active material is poor in dynamics, lithium ions have relatively poor movement efficiency under overcharge conditions. As a result, a large amount of lithium precipitation may occur in the battery, and lithium dendrites are prone to puncturing the separator, thereby triggering thermal runaway of the battery. On the contrary (in comparative embodiment 2), when the heat release is too high, heat accumulation inside the battery increases the temperature, so that thermal runaway may occur.

Further, FIG. 4 illustrates an overcharge curve of a secondary battery of graphite according to embodiment 1. In case where an overcharge voltage reaches 5.475 V, the battery stops being charged and keeps still for 1 hour. In this case, a voltage of the battery cell can still maintain an initial voltage, and temperature of the battery cell is relatively low (about 75 °C), which indicates that the secondary battery provided in embodiment 1 passes an overcharge test.

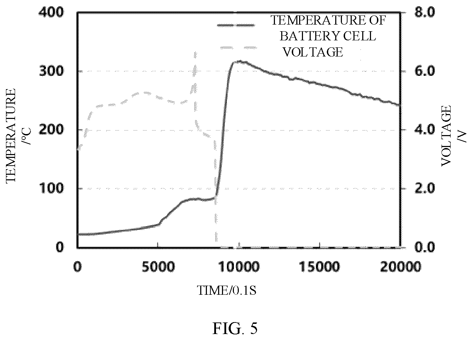

FIG. 5 illustrates an overcharge curve of a secondary battery of graphite according to comparative embodiment 2. In case where an overcharge voltage reaches 5.475 V, the battery stops being charged and keeps still for 1 hour. In this case, a voltage of the battery cell drops to 0 V, temperature of the battery cell increases to 300 °C, and thermal runaway occurs, which indicates that the secondary battery provided in comparative embodiment 2 fails an overcharge test.

In the description of embodiments of the disclosure, it may be noted that orientation or positional relations indicated by terms such as "center", "on", "under", "left", "right", "vertical", "horizontal", "in", "out", and the like are orientation or positional relations based on the accompanying drawings, only for facilitating description of the disclosure and simplifying the description, rather than explicitly or implicitly indicating the referred devices or elements must be in a particular orientation or constructed or operated in the particular orientation, and therefore they may not be construed as limiting the disclosure.

The above embodiments are only one of preferable embodiments of the disclosure, and cannot be used to limit the scope of the claims of this disclosure. Those of ordinary skill in the art can understand all or a part of the process to realize the above embodiments of the disclosure, and the equivalent changes made in accordance with the claims of this disclosure still belong to the scope of the disclosure.

Claims

1. A negative electrode sheet (100), comprising a current collector (20) and a negative active material layer (10) disposed on the current collector (20), wherein the negative active material layer (10) comprises a negative active material (11), and when a state of charge, SOC, of a battery (1000) with the negative electrode sheet (100) is 100% or a voltage of the battery (1000) is 3.65V, heat release Q of the negative active material layer (10) immersed in electrolyte (400) satisfies 400 J/g$\leq$Q$\leq$600 *J/g,*

wherein the electrolyte is formed by mixing ethylene carbonate, EC, and ethyl methyl carbonate, EMC, at a volume ratio of 3:7 and adding lithium hexafluorophosphate, $LiPF_6$, into the mixture, wherein $LiPF_6$ has a concentration of 1 mol/L,

wherein the heat release Q of the negative active material layer (10) is obtained by a differential scanning calorimeter, DSC, through measurement, and the measurement is performed by adding the negative active material layer (10) and the electrolyte into a test crucible at a mass ratio of 0.78:1 and heating the test crucible from 30 °C to 450 °C at a heating rate of 5 °C/min, and

a particle diameter *Dv10* of the negative active material (11) satisfies one of:

$$6.5\ \mu m \leqslant Dv10 \leqslant 10\ \mu m,$$

or

$$0.2 \leqslant Dv10/Dv90 \leqslant 0.4,$$

wherein *Dv10* refers to a particle diameter when a cumulative volume fraction reaches 10% in measuring a volume-based distribution using a laser scattering method, and

wherein *Dv90* refers to a particle diameter when the cumulative volume fraction reaches 90% in measuring the volume-based distribution using the laser scattering method.

2. The negative electrode sheet (100) of claim 1, wherein a gram capacity of the negative active material (11) ranges from 310 mAh/g to 350 mAh/g.

3. The negative electrode sheet (100) of claim 1, wherein the negative active material (11) is one or more of a graphite particle, a soft carbon particle, or a hard carbon particle.

4. A secondary battery (1000), comprising:

electrolyte (400);

a positive electrode sheet (200) at least partially immersed in the electrolyte (400);

a separator (300) located at one side of the positive electrode sheet (200) and at least partially immersed in the electrolyte (400); and

the negative electrode sheet (100) of any one of claims 1 to 3, wherein the negative electrode sheet (100) is disposed at one side of the separator (300) away from the positive electrode sheet (200) and at least partially immersed in the electrolyte (400).

5. An electricity-consumption device (2000), comprising the secondary battery (1000) of claim 4.


**Patentansprüche**

1. Negatives Elektrodenblatt (100), umfassend einen Stromabnehmer (20) und eine auf dem Stromabnehmer (20) angeordnete negative aktive Materialschicht (10), wobei die negative aktive Materialschicht (10) ein negatives aktives Material (11) umfasst, und wenn ein Ladezustand, SOC, einer Batterie (1000) mit dem negativen Elektrodenblatt (100) 100 % beträgt oder eine Spannung der Batterie (1000) 3,65 V beträgt, die Wärmefreisetzung Q der in Elektrolyt (400) eingetauchten negativen aktiven Materialschicht (10) 400 J/g$\leq$Q$\leq$600J/g erfüllt,

wobei der Elektrolyt durch Mischen von Ethylencarbonat, EC, und Ethylmethylcarbonat, EMC, gebildet wird, bei einem Volumenverhältnis von 3:7 und Zugabe von Lithiumhexafluorophosphat, $LiPF_6$, in das Gemisch, wobei $LiPF_6$ eine Konzentration von 1 mol/L aufweist,

wobei die Wärmefreisetzung *Q* der negativen aktiven Materialschicht (10) durch Messung mit einem dynamischen Differenzkalorimeter, DSC, erhalten wird und die Messung durch Hinzufügen der negativen aktiven Materialschicht (10) und des Elektrolyten in einen Testtiegel mit einem Massenverhältnis von 0,78:1 und Erhitzen des Testtiegels von 30 °C auf 450 °C bei einer Heizrate von 5 °C/min durchgeführt wird, und

ein Partikeldurchmesser *Dv10* des negativen aktiven Materials (11) eine der folgenden Bedingungen erfüllt:

$$6,5 \text{ µm} \leq Dv10 \leq 10 \text{ µm,}$$

oder

$$0,2 \leq Dv10/Dv90 \leq 0,4,$$

wobei sich *Dv10* auf einen Partikeldurchmesser bezieht, wenn ein kumulativer Volumenanteil 10 % bei der Messung einer volumenbasierten Verteilung unter Verwendung eines Laserstreuungsverfahrens erreicht, und wobei sich *Dv90* auf einen Partikeldurchmesser bezieht, wenn der kumulative Volumenanteil 90 % bei der Messung der volumenbasierten Verteilung unter Verwendung des Laserstreuungsverfahrens erreicht.

2. Negatives Elektrodenblatt (100) nach Anspruch 1, wobei eine Grammkapazität des negativen aktiven Materials (11) 310 mAh/g bis 350 mAh/g beträgt.

3. Negatives Elektrodenblatt (100) nach Anspruch 1, wobei das negative aktive Material (11) eines oder mehrere von einem Graphitpartikel, einem weichen Kohlenstoffpartikel oder einem harten Kohlenstoffpartikel ist.

4. Sekundärbatterie (1000), umfassend:

   Elektrolyt (400);
   ein positives Elektrodenblatt (200), das mindestens teilweise in den Elektrolyten (400) eingetaucht ist;
   einen Separator (300), der sich an einer Seite des positiven Elektrodenblatts (200) befindet und mindestens teilweise in den Elektrolyten (400) eingetaucht ist; und
   das negative Elektrodenblatt (100) nach einem der Ansprüche 1 bis 3, wobei das negative Elektrodenblatt (100) an einer Seite des Separators (300) weg von dem positiven Elektrodenblatt (200) angeordnet und mindestens teilweise in den Elektrolyten (400) eingetaucht ist.

5. Elektrizitätsverbrauchsvorrichtung (2000), die die Sekundärbatterie (1000) nach Anspruch 4 umfasst.

## Revendications

1. Feuille d'électrode négative (100), comportant un collecteur de courant (20) et une couche de matériau actif négatif (10) disposée sur le collecteur de courant (20), dans laquelle la couche de matériau actif négatif (10) comporte un matériau actif négatif (11), et lorsqu'un état de charge, SOC, d'une batterie (1000) avec la feuille d'électrode négative (100) est de 100 % ou une tension de la batterie (1000) est de 3,65 V, une libération de chaleur Q de la couche de matériau actif négatif (10) immergée dans un électrolyte (400) satisfait 400 J/g$\leq$Q$\leq$600J/g, dans laquelle l'électrolyte est formé par mélange de carbonate d'éthylène, EC, et de carbonate de méthyle d'éthyle, EMC, à un rapport volumétrique de 3:7 et ajout d'hexafluorophosphate de lithium, $LiPF_6$, dans le mélange, où $LiPF_6$ présente une concentration de 1 mol/L,

   dans laquelle la libération de chaleur *Q* de la couche de matériau actif négatif (10) est obtenue par un calorimètre différentiel à balayage, DSC, par mesure, et la mesure est effectuée en ajoutant la couche de matériau actif négatif (10) et l'électrolyte dans un creuset d'essai à un rapport de masse de 0,78:1 et en chauffant le creuset d'essai de 30 °C à 450 °C à une vitesse de chauffage de 5 °C/min, et
   un diamètre de particule *Dv10* du matériau actif négatif (11) satisfait l'un parmi :

$$6,5 \text{ µm} \leq Dv10 \leq 10 \text{ µm,}$$

ou

$$0,2 \leq Dv10/Dv90 \leq 0,4,$$

dans laquelle *Dv10* fait référence à un diamètre de particule lorsqu'une fraction volumique cumulée atteint 10 % dans la mesure d'une distribution basée sur le volume à l'aide d'un procédé de diffusion par laser, et

dans laquelle *Dv90* fait référence à un diamètre de particule lorsque la fraction volumique cumulée atteint 90 % dans la mesure de la distribution basée sur le volume à l'aide du procédé de diffusion par laser.

2. Feuille d'électrode négative (100) selon la revendication 1, dans laquelle une capacité en grammes du matériau actif négatif (11) va de 310 mAh/g à 350 mAh/g.

3. Feuille d'électrode négative (100) selon la revendication 1, dans laquelle le matériau actif négatif (11) est une ou plusieurs parmi une particule de graphite, une particule de carbone souple ou une particule de carbone dur.

4. Batterie (1000) secondaire, comportant :

un électrolyte (400) ;
une feuille d'électrode positive (200) au moins partiellement immergée dans l'électrolyte (400) ;
un séparateur (300) situé d'un côté de la feuille d'électrode positive (200) et au moins partiellement immergé dans l'électrolyte (400) ; et
la feuille d'électrode négative (100) selon l'une quelconque des revendications 1 à 3, dans laquelle la feuille d'électrode négative (100) est disposée d'un côté du séparateur (300) à l'écart de la feuille d'électrode positive (200) et au moins partiellement immergée dans l'électrolyte (400).

5. Dispositif de consommation d'électricité (2000) comportant la batterie (1000) secondaire selon la revendication 4.

FIG. 1

FIG. 2

FIG. 3

FIG. 4

FIG. 5

**EP 4 517 862 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010112442 A1
- US 2014099555 A1